Europäisches Patentamt

European Patent Office

Office européen des brevets

(19)

(11) **EP 0 645 559 B1**

(12)

# EUROPEAN PATENT SPECIFICATION

(45) Date of publication and mention
of the grant of the patent:
**28.05.1997 Bulletin 1997/22**

(51) Int Cl.⁶: **F16H 61/02**

(21) Application number: **94114786.0**

(22) Date of filing: **20.09.1994**

(54) **Control system for automatic transmissions**

Steuerungssystem für automatische Getriebe

Système de commande pour transmissions automatiques

(84) Designated Contracting States:
**DE GB**

(30) Priority: **29.09.1993 JP 243364/93**

(43) Date of publication of application:
**29.03.1995 Bulletin 1995/13**

(73) Proprietor: **AISIN AW CO., LTD.**
**Anjo-shi Aichi-ken (JP)**

(72) Inventors:
 • **Tsutsui, Hiroshi**
   **Anjo-shi, Aichi-ken (JP)**
 • **Yamamoto, Yoshihisa**
   **Anjo-shi, Aichi-ken (JP)**

(74) Representative: **VOSSIUS & PARTNER**
   **Postfach 86 07 67**
   **81634 München (DE)**

(56) References cited:
   **EP-A- 0 513 424**      **DE-A- 3 933 295**
   **DE-A- 4 033 574**      **GB-A- 2 240 194**
   **US-A- 5 089 963**

## Description

The present invention relates to a control system for an automatic transmission.

In the prior art, a control system for an automatic transmission for a vehicle has its vehicle speed and throttle opening detected so that a corresponding gear stage may be selected. In this kind of automatic transmission, however, a shift is always made in the same shift pattern so that it cannot match the taste of the driver. Still the worse, the shift can not match the situations of the running road in case the vehicle is to run on a road surface having a changing friction coefficient or in a mountainous district.

Thus, there has been proposed a control system for an automatic transmission, which can have its shift changed by the shifting operation with a shift pattern according to the taste of the driver or the situations of the running road (as disclosed in Japanese Patent Laid-Open No. 261745/1987).

In this case, the automatic transmission is equipped with a manual shift lever so that a shift is executed at a predetermined shift point while the vehicle is running with the manual shift. Moreover, the control system of the automatic transmission reads the data of the vehicle speed and the throttle opening compares these data and the data of the fundamental shift pattern to compute a constant of proportion so that it corrects the fundamental shift pattern with the constant of proportion. If, therefore, the shifting operation is actually performed according to the taste of the driver or the situations of the running road, it is possible to establish a shift pattern according to the shifting operation.

Thus, there has been proposed a control system for an automatic transmission, which corrects the shift pattern by dialogues (as disclosed in Japanese Patent Laid-Open No. 134451/1990).

In this case, the control system of the automatic transmission corrects the shift pattern by holding dialogues with the driver to draw the fuzzy inference. Specifically, the control system of the automatic transmission corrects the shift pattern by drawing the fuzzy inference on the basis of the qualitative answer obtained from the dialogues with the driver, by computing a correction coefficient from the fuzzy inference, and by multiplying the vehicle speed, the shift of which is to be decided, by the correction coefficient.

In the control system for the automatic transmission of the prior art, in which the shift pattern is produced by the shifting operation, the fundamental shift pattern is corrected by the single constant of proportion, so that the shift according to the driver's taste and the road situations can be achieved at the predetermined shift point but not always at another shift point.

In case an actual shifting operation is to be conducted according to the situations of the running road, it is difficult to be proper for the road situations. Specifically, the driver will not make a shift always at the same shift point because the shift point has a dispersion of a certain extent. Moreover, the driver may make an improper shifting operation so that the shift pattern is undesirably corrected according to the data of the vehicle speed and the throttle opening at the shift point of an improper shifting operation.

In the case of the dialogue type, on the other hand, one correction coefficient is computed by the fuzzy inference so that the shift pattern is corrected to correspond to the correction coefficient. As a result, what is obtained is only one shift pattern but not a variety of shift patterns according to the driver's taste and the road situations.

On the other hand, the correction coefficient is premised as variable for the fuzzy inference by only the vehicle speed and the throttle opening so that the shift pattern intended by the driver is difficult to achieve. Specifically, if the premising variables are increased the more, the more items have to be answered by the driver in the dialogues. For the more items to be answered, the driver is required to have the more special knowledge on the vehicle and the running road so that he or she finds it difficult to make proper answers.

From US-5 089 963 a transmission gear shifting control system selective of gear ratio of an automotive automatic paratransmission is known. The control system employs a strategy of learning of driving condition in order to select one of a plurality of vehicle driving pattern so as to adapt to the vehicular driving condition and to driver's desires by means of a neuron computer.

The present invention has an object to solve the aforementioned problems concomitant with a control system for an automatic transmission and to provide a control system for an automatic transmission, which can easily establish a variety of shift patterns according to the taste of a driver and the situations of a running road.

The object is solved by the features of claim 1.

The neural network outputs, when it receives the detected value of the sensor as its input value, the gear ratio by performing the neuro-computation on the basis of the input value. The neural network learns in the teaching mode and performs the neuro-computation in the automatic mode to output the gear ratio. Moreover, the neural network learns according to the learning pattern, which is composed of the input value, teaching gear ratio and tolerance error, to output the gear ratio. The neural network ends its learning when the errors of the gear ratio and the teaching gear ratio are converted to the tolerance error.

In this case, the tolerance error is computed on the basis of at least one of the propriety of the teaching gear ratio, the ambiguity of the input value and the ambiguity of the teaching gear ratio. As a result, the neural network will not have its learning function degraded even if the learning is insufficient because of a dispersion or shortage of the teaching signal.

Fig. 1 is a block diagram showing a control system for an automatic transmission according to an embodiment of the present invention;

Fig. 2 is a flow chart showing the control system of the automatic transmission according to the embodiment of the present invention;

Fig. 3 is a diagram illustrating the conception of a neural network in the embodiment of the present invention;

Fig. 4 is a diagram illustrating the degree of satisfaction of gear stage convert means in the embodiment of the present invention;

Fig. 5 is a diagram illustrating the ambiguity of an input value in the embodiment of the present invention;

Fig. 6 is a diagram illustrating the ambiguity of a teaching gear ratio in the embodiment of the present invention;

Fig. 7 is a diagram illustrating a tolerance error in the embodiment of the present invention;

Fig. 8 is a diagram illustrating the relation between the teaching gear ratio and a fuel economy optimizing gear ratio in the embodiment of the present invention;

Fig. 9 is a diagram illustrating the characteristics of the fuel economy optimizing gear ratio and a comfort optimizing gear ratio;

Fig. 10 is a diagram illustrating the ambiguity of an input value in the embodiment of the present invention when a detected value is exemplified by an accelerator opening;

Fig. 11 is a diagram illustrating the ambiguity of the input value in the embodiment of the present invention when the detected value is exemplified by a vehicle speed;

Fig. 12 is a diagram illustrating the ambiguity of a subject in the embodiment of the present invention;

Fig. 13 is a first diagram showing the neuro-computation of the neural network in the embodiment of the present invention; and

Fig. 14 is a second diagram showing the neuro-computation of the neural network in the embodiment of the present invention.

The present invention will be described in detail in the following in connection with its embodiments with reference to the accompanying drawings.

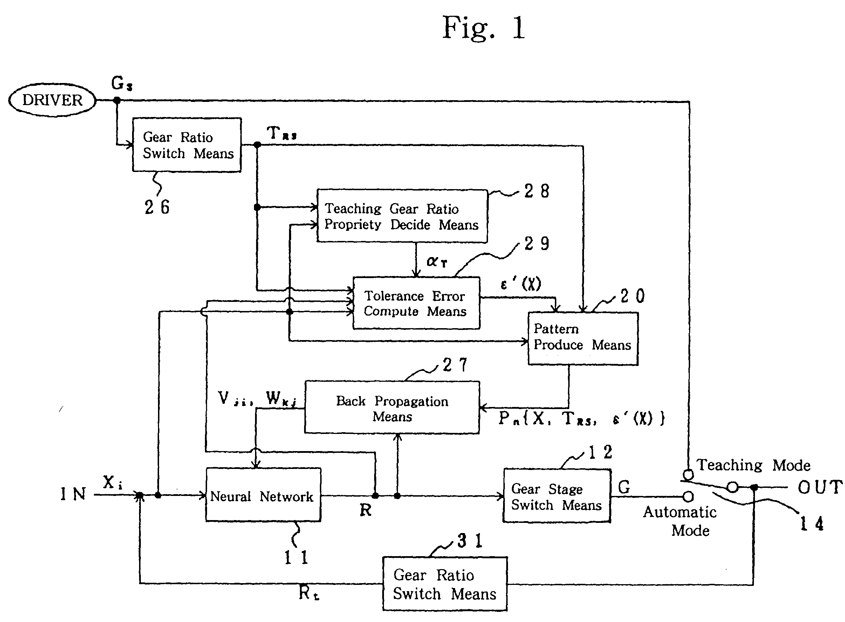

Fig. 1 is a block diagram showing a control system for an automatic transmission according to an embodiment of the present invention.

In Fig. 1, reference numeral 11 designates a neural network which is formed by coupling a number of neurons. In response to an input value $X_i$ detected by the not-shown sensor, the neural network 11 outputs a gear ratio R. Moreover, numeral 12 designates gear stage convert means for converting the gear ratio R outputted from the neural network 11 into a gear stage G, and numeral 14 designates mode switch means for switching a teaching mode and an automatic mode.

In this case, the gear stage is selected automatically in the automatic transmission mode in accordance with the running condition of the vehicle and is selected in the manual transmission mode by the driver's shifting operation according to the running condition of the vehicle and the situations of the running road. For these selections, there is arranged shift operate means such as the not-shown shift lever.

When, moreover, the teaching mode is switched in the manual transmission mode by the mode switch means 14, a teaching gear stage $G_S$ is outputted through the mode switch means 14 to the not-shown CPU. Incidentally, the shift operate means should not necessarily be limited to the shift lever but may be exemplified by a control switch.

The CPU turns ON/OFF the not-shown solenoid corresponding to the teaching gear stage $G_S$ so that the working oil is fed to the hydraulic servo of the not-shown hydraulic circuit. When this hydraulic servo is fed with the oil, the corresponding frictional engagement elements are applied and/or released to establish an intended gear stage.

In the automatic transmission mode, on the other hand, if the mode is switched to the automatic mode by the mode switch means 14, the gear stage G outputted from the gear stage convert means 12 is outputted through the mode switch means 14 to the not-shown CPU.

Incidentally, in the teaching mode, pattern produce means 20 produces a learning pattern $P_n$, upon which the neural network 11 learns to correct the shift pattern given as an initial value.

In the present embodiment, the learning pattern $P_n$ has a teaching input value X, which is generated on the basis of the input value $X_1$ when the driver performs the shifting operation, and a teaching gear ratio $T_{RS}$ as the teaching signal, and the neural network 11 ends its learning when an error $E_r$ between the gear ratio R and the teaching gear ratio $T_{RS}$ satisfies a predetermined converging condition.

For this, there is arranged gear ratio convert means 26 for converting the teaching gear stage $G_S$, which is selected by the driver's shifting operation, into the teaching gear ratio $T_{RS}$. This teaching gear ratio $T_{RS}$ and the input value $X_i$ are inputted to the pattern produce means 20 to produce the learning pattern $P_n$ which is composed of: the teaching input value X produced on the basis of the input value $X_i$, the teaching gear ratio $T_{RS}$ and a tolerance error $\varepsilon\,'(X)$.

In back propagation means 27 acting as the combined load correct means, moreover, combined loads $V_{ji}$ and $W_{kj}$ are repeatedly corrected on the basis of the learning pattern $P_n$ and gear ratio R so that the error $E_P$ between the gear ratio R outputted by the neural network 11 and the teaching gear ratio $T_{RS}$ is determined at each correction.

Incidentally, the teaching gear stage $G_S$ is selected by the driver's shifting operation but is different depending upon not only the driver's taste and the road situations but also the environmental situations such as the weather or the time.

Thus, there is arranged teaching gear ratio propriety decide means 28, by which the teaching gear ratio $T_{RS}$ is evaluated in terms of the fuel economy, the driving force and the comfort to determine its propriety $\alpha_T$. This makes it possible to prevent the gear ratio R outputted from the neural network 11 from being deteriorated by a bad teaching signal.

In the teaching mode, on the other hand, the driver performs the shifting operation while imagining the predetermined input value $X_i$, which has a dispersion. Moreover, a dispersion is also present in the teaching gear ratio $T_{RS}$ which is selected by the shifting operation. Thus, there is arranged tolerance error compute means 29 for determining the tolerance error $\varepsilon'(X)$ by using the fuzzy inference while considering the ambiguity based upon the dispersion of the teaching signal and the ambiguity based upon a shortage of the learning data. As a result, the neural network 11 can have its learning function prevented from being degraded even if the teaching signal disperses or becomes short so that the learning is insufficient.

Incidentally, numeral 31 designates gear ratio convert means for converting the gear stages G and $G_S$ outputted through the mode switch means 14 into a gear ratio $R_t$, to input the gear ratio $R_t$ as the input value $X_i$ to the neural network 11.

Here will be described the operations of the control system thus constructed for the automatic transmission.

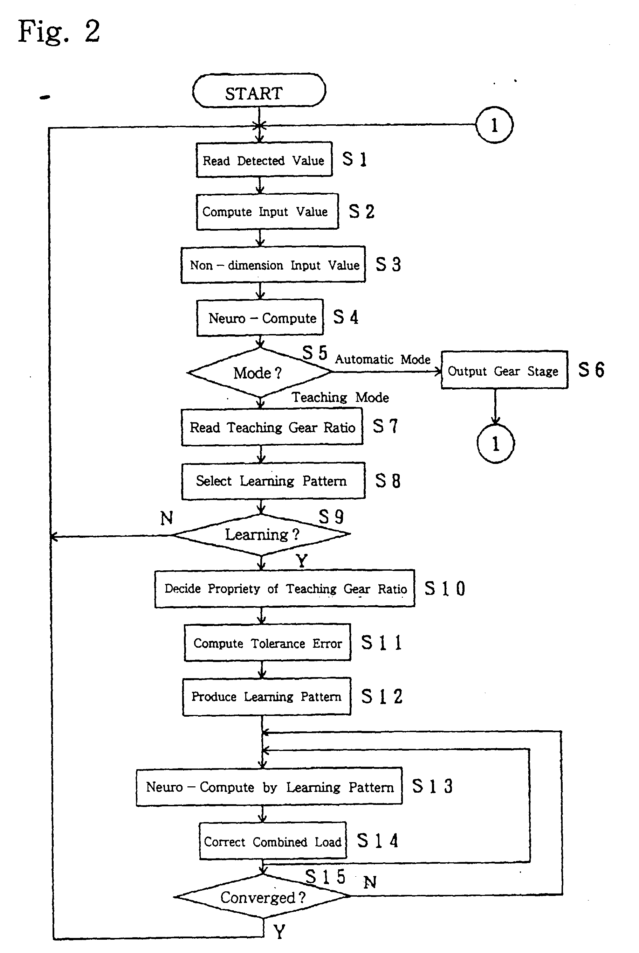

Fig. 2 is a flow chart showing the control system of the automatic transmission according to the embodiment of the present invention.

Step S1:     The detected values of the individual not-shown sensors are read in the not-shown CPU.

Step S2:     The input value $X_i$ is computed.

Step S3:     The computed input value $X_i$ is non-dimensioned.

Step S4:     The neural network 11 (as shown in Fig. 1) performs a neuro-computation of the gear ratio R.

Step S5:     It is decided which it is the automatic mode or the teaching mode. The routine advances to Step S6 for the automatic mode and to Step S7 for the teaching mode.

Step S6:     The gear stage convert means 12 outputs the gear stage G, and the routine returns to Step S1. A shift is not effected, if the gear stage G outputted is identical to the present one, but effected otherwise.

Step S7:     The teaching gear ratio $T_{RS}$ is read.

Step S8:     The learning pattern $P_n$ unlearned is selected. The input value $X_i$ is not learned if not changed so much from the learned one, because any further learning is unnecessary.

Step S9:     It is decided whether or not the learning pattern $P_n$ is to be learned. The routine advances to Step S10, if the answer is YES, but otherwise returns to Step S1.

Step S10:    The teaching gear ratio propriety decide means 28 decides the propriety of the teaching gear ration $T_{RS}$.

Step S11:    The tolerance error $\varepsilon'(X)$ is computed while considering the ambiguity of the teaching signal and the ambiguity based upon a shortage of learning data.

Step S12:    The pattern produce means 20 produces the learning pattern $P_n$.

Step S13:    The neural network 11 neuro-computes the gear ratio R according to the learning pattern $P_n$.

Step S14:    The back propagation means 27 corrects the combined loads $V_{ji}$ and $W_{kj}$. Steps S13 and S14 are repeated till the learning of all the learning patterns $P_n$ is ended.

Step S15:    It is decided whether or not the error $E_P$ between the gear ratio R and the aforementioned teaching gear ratio $T_{RS}$ has been converged under a predetermined converging condition. The routine returns to Step S1 if the answer is YES and otherwise to Step S13.

Here will be described the neural network 11 in the following.

The input value $X_i$ is inputted in the automatic mode and the teaching mode to the neural network 11 so that it is used in the automatic mode for neuro-computing the gear ratio R and in the teaching mode for converging the error $E_P$ between the gear ratio R and the teaching gear ratio $T_{RS}$.

For these operations, the detected values are detected by the not-shown individual sensors and are read in the not-shown CPU, in which they are subjected to the predetermined computations, until they are non-dimensioned.

The detected values to be detected by the sensors are exemplified by an accelerator opening A, a brake depression B, a steering angle S, a vehicle speed v, a present gear ratio $R_t$, the preceding gear ratio $R_{t-1}$, a running resistance DR and a coefficient of friction LR of a road surface, so that the input value $X_i$ is computed by those detected values.

In this case, the detected values can be used as they are as the input value $X_i$. Alternatively, their quantities of change can also be used as the input value $X_i$.

For example: the accelerator operating speed dA can be employed as the quantity of change of the accelerator opening A; the brake operating rate dB as the quantity of change of the brake depression B; the steering operating rate dS as the quantity of change of the steering angle S; and the acceleration dv as the quantity of change of the vehicle speed v. These quantities of change can be used as the input value $X_i$.

The input value $X_i$ can further employ: the number of brake depressions NB 100 [m] ahead of the point, as expressed by

$$[\text{Eq. 1}] \qquad NB = \frac{\text{Brake Depression No.}}{100 \, [m]} \; ;$$

the average speed $v_A$ for a running time period of 5 mins., as expressed by

$$[\text{Eq. 2}] \qquad v_A = \frac{\int v dt}{5 \, [m]} \; ;$$

the average acceleration $dv_A$ for a running time period of $\Delta t$, as expressed by

$$[\text{Eq. 3}] \qquad dv_A = \int [\frac{\partial v}{\partial t}] \, dt/t \Delta t;$$

and the average accelerator opening $dA_A$.

Subsequently, the input value $X_i$ is non-dimensioned in the following manner. Incidentally, subscript "max" in the individual Equations indicates the maximums of the individual detected values.

$X_1 = A \, [\%] / 100 \, [\%]$ ;
$X_2 = B \, [\%] / 100 \, [\%]$ ;
$X_3 = S \, [° \,] / 60 \, [° \,]$ ;
$X_4 = v \, [km/h] / 150 \, [km/h]$ ;
$X_5 = dA \, [\%/s] / dA_{max} \, [\%/s]$ ;
$X_6 = dB \, [\%/s] / dB_{max} \, [\%/s]$ ;
$X_7 = dS \, [° \,/s] / dS_{max} \, [° \,/s]$ ;
$X_8 = dv \, [m/s^2] / dv_{max} \, [m/s^2]$ ;
$X_9 = NB \, [\%] / NB_{max} \, [\%]$ ;
$X_{10} = v_A \, [km/h] / v_{Åmax} \, [km/h]$ ;
$X_{11} = dv_A \, [m/s] / dv_{Amax} \, [m/s]$ ;
and
$X_{12} = dA_A \, [\%/s] / dA_{Amax} \, [\%/s]$.

The input value $X_i$ thus non-dimensioned is inputted to the neural network 11.

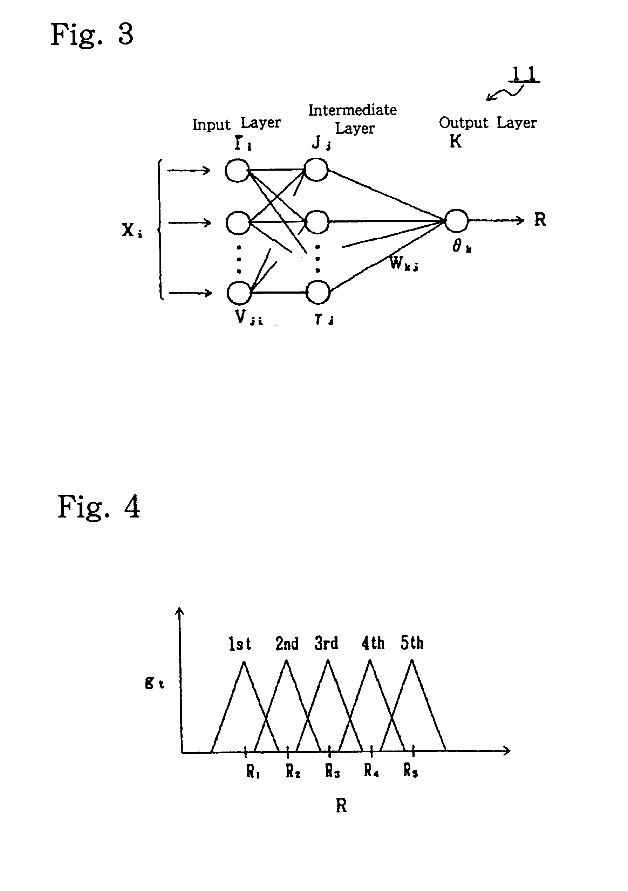

Fig. 3 is a diagram illustrating the concept of the neural network in the present embodiment of the present invention.

In Fig. 3: letters $X_i$ designate the input value to be inputted to each neuron of the input layer; letters $I_i$ an input signal to be inputted to each neuron of the intermediate layer; letters $J_j$ an input signal to be inputted to the output layer; and letter K an output signal of the output layer. Moreover, letters $V_{ji}$ designate the combined load of the input signal $I_i$; letters $W_{kj}$ the combined load of the input signal $J_j$; and letters $\gamma_j$ and $\theta_k$ quantities of offset.

In the neural network 11, as expressed by the individual Equations (1) to (4), the input value $X_i$ is inputted to each neuron of the input layer and is weighed by the combined load $V_{ji}$ so that the input signal $I_i$ is inputted to each neuron of the intermediate layer. Moreover, the input signal $I_i$ inputted to each neuron of the intermediate layer is weighed by the combined load $W_{kj}$, and the resultant input signal $J_j$ is inputted to the neurons of the output layer so that the output signal K is outputted from the output layer. In the present embodiment, the output signal K is the gear ratio R.

[Eq. 4]

$$I_i = X_i \qquad (i = 1 \text{ to } m) \qquad\qquad (1) \; ;$$

$$J_j = \sum_{i=1}^{m} V_{ji}I_i + \gamma_j \qquad (j = 1 \text{ to } n) \quad - - - (2);$$

$$K = \sum_{j=1}^{n} W_{kj}f(J_j) + \theta_k. \qquad\qquad - - - (3);$$

and

$$R = f(K) \qquad\qquad\qquad (4).$$

The output signal K and gear ratio R are given by a sigmoid function f(X), as expressed by

$$[Eq. 5] \qquad f(x) = \frac{1}{\{1 + \exp(-x/u_o)\}} .$$

Incidentally, letters $u_o$ designate a coefficient of gradient of the sigmoid function f(X).

Here will be described the gear stage convert means 12 (as shown in Fig. 1).

The gear ratio R outputted from the neural network 11 is inputted to and converted by the gear stage convert means 12 into the gear stage G.

Fig. 4 is a diagram illustrating the degree of satisfaction of the gear stage convert means in the embodiment of the present invention. In Fig. 4, the abscissa indicates the gear ratio R, and the ordinate indicates the degree of satisfaction $g_t$ of each gear stage G.

In Fig. 4, letters $R_1$ to $R_5$ designate the individual gear stages G, i.e., the gear ratios of 1st to 5th speeds, and the degree of satisfaction $g_t$ is given for each gear stage G by the following Equation:

$$g_t = \mu_t (R) \qquad (t = 1 \text{ to } 5).$$

Then, the gear stage G corresponding to the maximum degree of satisfaction $g_t$ is selected.

Here will be described the teaching gear ratio propriety decide means 28 (as shown in Fig. 1) and the tolerance error compute means 29.

The teaching gear ratio propriety decide means 28 decides the propriety of the teaching gear ratio $T_{RS}$ on the basis of the teaching gear ratio $T_{RS}$ outputted from the gear ratio convert means 26 and the input value $X_i$.

In this case, the fuel economy matching degree $M_f$, the driving force matching degree $M_F$ and the comfort matching degree $M_C$ are computed from the individual equations (5) to (7), so that the propriety $\alpha_T$ of the teaching gear ratio $T_{RS}$ is computed on the basis of those matching degrees by the Equation (8).

[Eq. 6]

$$M_r = \int_{t_1}^{t_2} | T_{RS} - R_r | \, dt / M_{rmax} \qquad - - - (5);$$

$$M_F = \int_{t_1}^{t_2} (\frac{\triangle \, dv}{\triangle \, A} \cdot \frac{dv + DR/w}{A}) \, dt / M_{Fmax} \quad - - - (6);$$

$$M_C = \int_{t_1}^{t_2} |T_{RS} - R_C| \, dt / M_{Cmax} \qquad\qquad - - - (7);$$

and

$$\alpha_T = \max (1-M_f, M_F, 1-M_C) \qquad\qquad (8).$$

Incidentally, letters $M_{fmax}$, $M_{Fmax}$ and $M_{Cmax}$ designate constants for non-dimensioning the fuel economy matching degree $M_f$, driving force matching degree $M_F$ and comfort matching degree $M_C$, respectively; letters $R_f$ a fuel economy optimizing gear ratio; letter w a vehicle mass; and letters $R_C$ a comfort optimizing gear ratio.

The fuel economy matching degree $M_f$ is an index indicating the degree of deterioration of the fuel economy, which increases the more as it leaves the fuel economy optimizing gear ratio $R_f$ the more.

On the other hand, the driving force matching degree $M_F$ is determined by multiplying the degree of achievement of the quantity of acceleration increase $\Delta$ dv with respect to the degree of accelerator operation, by the degree of achievement of the substantial acceleration (dv + DR/W) with respect to the accelerator opening A, and by integrating the product for the time period of $t_1$ to $t_2$. The driving force matching degree $M_F$ thus determined is an index indicating the responsiveness of the vehicle to the degree of accelerator operation $\Delta A$ for the time period of $t_1$ to $t_2$. Unless a sufficient acceleration dv is achieved, the driving force matching degree $M_F$ decreases. In the Equation (6), on the other hand, the degree of achievement of the increase in the acceleration $\Delta$ dv for the degree of accelerator operation $\Delta$ A may be exclusively integrated.

Moreover, the comfort matching degree $M_C$ is an index indicating the degree of deterioration of comfort and takes the larger value as it leaves the comfort optimizing gear ration $R_C$ the more.

On the other hand, the tolerance error compute means 29 is fed with the input value $X_i$, the teaching gear ratio $T_{RS}$, the gear ratio R and the propriety $\alpha_T$, and evaluates the subject

"the teaching gear ratio is set to $T_{RS}$ for the input value $X_i$"

to compute the ambiguity $\beta_T$ of the subject.

Therefore, the tolerance error compute means 29 computes the ambiguity based upon a dispersion of the teaching signal and the ambiguity based upon a shortage of the learning data, by the Equations (9) and (10). In this case, the ambiguity based upon the dispersion of the teaching signal can be expressed by the ambiguity (as will be called the "ambiguity of the input value $X_i$") $\mu_X(X_i)$ having the input value $X_i$, and the ambiguity based upon the shortage of the learning data can be expressed by the ambiguity (as will be called the "ambiguity of the teaching gear ratio $T_{RS}$") $\mu_T$ $(T_{RS})$ having the teaching gear ratio $T_{RS}$ for the input value $X_i$.

Subsequently, the tolerance error compute means 29 computes the tolerance error $\varepsilon$ '(X) on the basis of the ambiguity $\beta_T$ of the subject and the propriety $\alpha_T$ of the teaching gear ratio $T_{RS}$.

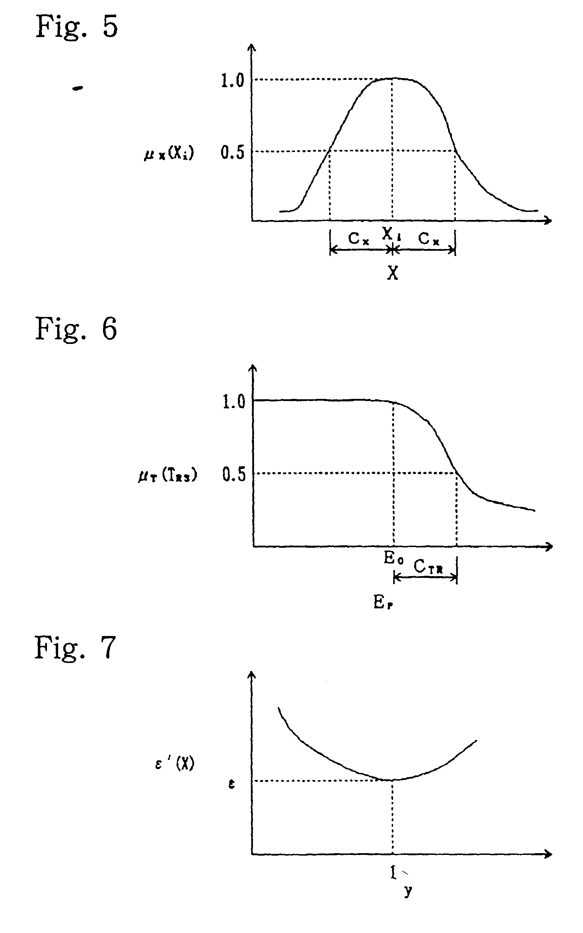

Fig. 5 is a diagram illustrating the ambiguity of the input value in the embodiment of the present invention; Fig. 6 is a diagram illustrating the ambiguity of the teaching gear ratio in the embodiment of the present invention; and Fig. 7 is a diagram illustrating the tolerance error in the embodiment of the present invention. In Fig. 5, the abscissa indicates the input value $X_i$, and the ordinates the ambiguity $\mu_X(X_i)$ of the input value $X_i$. In Fig. 6, the abscissa indicates the teaching gear ratio $T_{RS}$, and the ordinates indicates the ambiguity $\mu_T(T_{RS})$. In Fig. 7, the abscissa indicates the ambiguity y of the tolerance error $\varepsilon$ '(X), and the ordinate indicates the tolerance error $\varepsilon$ '(X).

The ambiguity $\mu_X(X_i)$ of the input value $X_i$ can be expressed by the following fuzzy function, as plotted by the curve of Fig. 5:

[Eq. 7]

$$\mu_x(X_i) = \left\{ 1 - \frac{1}{1 + \left(\dfrac{C_x}{X_i - X}\right)^2} [X=X_i], \quad 1 \quad [X=X_i] \right\}$$

$$- - - (9).$$

In this case, letters $C_X$ designate a constant for setting the difference between the input value $X_i$, at which the ambiguity $\mu_X(X_i)$ takes 1, and the input value $X_i$ at which the same takes 0.5.

On the other hand, the ambiguity $\mu_T(T_{RS})$ of the teaching gear ratio $T_{RS}$ takes the larger value as the error $E_P$ between the gear ratio R outputted by the neural network 11 (as shown in Fig. 1) and the teaching gear ratio $T_{RS}$ takes the larger value.

Therefore, the ambiguity $\mu_T(T_{RS})$ of the teaching gear ratio $T_{RS}$ can be expressed by the following fuzzy function, as plotted by the curve of Fig. 6:

[Eq. 8]

$$\mu_T(T_{RS}) = \left\{ 1 - \cfrac{1}{1 + \left(\cfrac{C_{TR}}{E_o - E_P}\right)^2} \quad [E_o < E_P], \quad [E_o > E_P] \quad 1 \right\}$$

$$- - - (10).$$

In this case, letters $C_{TR}$ designate a constant for setting the difference between the minimum $E_o$ of the error $E_P$ and the error $E_P$ at which the ambiguity $\mu_T(T_{RS})$ of the teaching gear ratio $T_{RS}$ takes 0.5.

Therefore, the ambiguity $\beta_T$ of the subject

"the teaching gear ratio is set to $T_{RS}$ for the input value $X_i$"

can be computed by the Equation (11):

$$\beta_T = \min \{\mu_X(X_i), \mu_T(T_{RS})\} \tag{11}.$$

Moreover, the learning degree, i.e., the ambiguity (as will be called the "ambiguity of the tolerance error $\varepsilon '(X)$") y, in which the error $E_P$ is converged to the tolerance error $\varepsilon '(X)$, is expressed by the propriety $\alpha_T$ of the teaching gear ratio $T_{RS}$ and the ambiguity $\beta_T$, as follows:

$$y = \min (\alpha_T, \beta_T).$$

Therefore, the intrinsic set error $\varepsilon (= E_o)$ is corrected by the ambiguity y of the tolerance error $\varepsilon '(X)$, and this tolerance error $\varepsilon '(X)$ is set by the following function, as plotted by the curve of Fig. 7:

$$\varepsilon '(X) = \varepsilon \cdot \{(1 - y)^2 + 1\}.$$

Thus, the neural network 11 learns till the following Relation is satisfied:

$$E_P \rightarrow \varepsilon '(X).$$

Here will be described the pattern produce means 20 in the following.

In this pattern produce means 20, not only the input value $X_i$ but also the teaching input value X composed of a neighborhood value of the input value $X_i$, as follows, is produced so that the learning pattern $P_n$ is produced on the basis of the teaching input value X:

$$X = X_i + \Delta X_n.$$

Specifically, the teaching input value X and the teaching gear ratio $T_{RS}$ are used as the teaching signals to produce the learning pattern $P_n$ for converging the error $E_P$ into the tolerance error $\varepsilon '(X)$.

Here will be described the back propagation means 27 in the following.

In the back propagation means 27, the teaching input value X, the teaching gear ratio $T_{RS}$ and the gear ratio R are inputted to correct the combined loads $V_{ji}$ and $W_{kj}$ of the neural network 11 so that the error $E_P$ may be converged into the tolerance error $\varepsilon'(X)$.

In this case, the convergence of the error $E_P$ into the tolerance error $\varepsilon'(X)$ is decided by the following converging condition. Specifically, it is decided that the error $E_P$ is converged into the tolerance error $\varepsilon'(X)$, when the sum $E_t$ of the error $E_P$ is minimized for a predetermined time period while the neural network 11 is learning.

The convergence can also be decided when a sum $E_t'$, as expressed by the Equation (12), becomes smaller than the convergence value $\varepsilon_t$:

$$[\text{Eq. 9}] \qquad E_t' = \Sigma \frac{E_P}{\varepsilon'(X)} \tag{12}$$

Moreover, the combined loads $V_{ji}$ and $W_{kj}$ by the back propagation means 27 and the offset quantities $\gamma_j$ and $\theta_k$ are corrected, as expressed by the Equations (13) to (20):

[Eq. 10]

$$\delta_k = T_{RS} - R \tag{13};$$

$$\delta^k = 2\delta_k R(1 - R)/u_o \tag{14};$$

$$\sigma_j = \Sigma \delta_k W^t_{kj} \tag{15};$$

$$\sigma^j = 2\sigma_j H_j (1 - H_j)/u_o \tag{16};$$

$$W^{t+1}_{kj} = W^t_{kj} + \alpha_j \frac{\partial E_P}{\partial W^t_{kj}} = W^t_{kj} + \alpha_j \delta^k H_j \tag{17};$$

$$\theta^{t+1}_k = \theta^t_k + \beta_j \frac{\partial E_P}{\partial \theta^t_k} = \theta^t_k + \beta_j \delta^k \tag{18};$$

$$V^{t+1}_{ji} = V^t_{ji} + \alpha_i \frac{\partial E_P}{\partial V^t_{ji}} = V^t_{ji} + \alpha_i \delta^j I_i \tag{19};$$

and

$$\gamma^{t+1}_j = \gamma^t_j + \beta_i \frac{\partial E_P}{\partial \gamma^t_j} = \gamma^t_j + \beta_i \sigma^j \tag{20}.$$

Incidentally, letters $H_j$ designate the output $f(J_j)$ of the intermediate layer. Moreover, letter t appearing in the individual Equations (15) and (17) to (20) indicates that the combined loads $V_{ji}$ and $W_{kj}$ and the quantities of offset $\gamma_j$ and $\theta_k$ are those before corrected, and letters (t+1) appearing in the individual Equations (17) to (20) indicate that the combined loads $V_{ji}$ and $W_{kj}$ and the quantities of offset $\gamma_j$ and $\theta_k$ are those after corrected.

In the case of the correction moment method, the combined load $W_{kj}$ can be given by the Equation (21):

[Eq. 11]

$$W^{t+1}{}_{kj} = W^t{}_{kj} + \left\{ \alpha_j \cdot \frac{\partial E_P}{\partial W^t{}_{kj}} \quad m^t (W^t{}_{kj} - W^{t-1}{}_{kj}) \right\}$$
$$(m^t = t^{t-1} + \triangle m, \quad m^t < 0.9)$$

$$- - - (21)$$

Here will be described the specific controls of the control system for the automatic transmission in the embodiment of the present invention.

In this case, the accelerator opening A, the accelerator operating speed dA, the vehicle speed v and the acceleration dv are selected as the detected values of the input value $X_i$ and are set to the following values:

A = 50 [%];
dA = 12 [%/s];
v = 70 [km/h];
and
dv = 20 [m/s$^2$].

Next, the input value $X_i$ is non-dimensioned, as follows:

$X_1$ = A [%] / 100 [%] = 50 / 100 = 0.5;
$X_2$ = dA [%/s] / 60 [%/s] = 12 / 60 = 0.2;
$X_3$ = v [km/h] / 210 [km/h] = 70 / 210 = 0.3;
and
$X_4$ = dv [m/s$^2$] / 40 [m/s$^2$] = 20 / 40 = 0.5.

Subsequently, the input value $X_i$ thus non-dimensioned is inputted to the neural network 11 (as shown in Fig. 1). This neural network 11 performs the neuro-computations, as expressed in the following, on the basis of the input value $X_i$:

[Eq. 12]

$$I_i = X_i \qquad (i = 1 \text{ to } 4)$$

$$J_j = \sum_{i=1}^{4} V_{ji} I_1 + \gamma_j \qquad (j = 1 \text{ to } 4)$$

$$K = \sum_{j=1}^{4} V_{kj} f(J_j) + \theta_k$$

In this case, the coefficient of gradient $u_o$ of the sigmoid function f(x) is set to 0.4.

If the gear ratio R outputted as the output signal K of the output layer has the following value:

R = 2.1, the gear stage G having the gear ratio R set to 2.1 is determined in the gear stage convert means 12. For this, the degree of satisfaction $g_t$ of each gear stage is read, as follows, so that the 2nd speed, at which the degree of satisfaction $g_t$ is maximized, is provided for the gear stage G.

Next, the propriety of the teaching gear ratio $T_{RS}$ is decided in the teaching gear ratio propriety decide means 28.

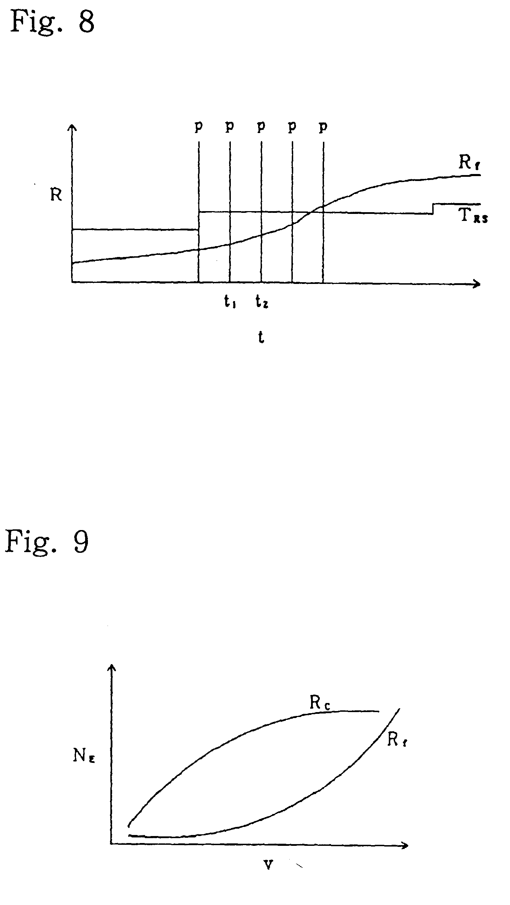

Fig. 8 is a diagram illustrating the relation between the teaching gear ratio and the fuel economy optimizing gear ratio in the embodiment of the present invention, and Fig. 9 is a diagram illustrating the characteristics of the fuel economy optimizing the gear ratio and the comfort optimizing gear ratio. In Fig. 8, the abscissa indicates the time t, and the ordinate indicates the gear ratio R. In Fig. 9, on the other hand, the abscissa indicates the vehicle speed v, and the ordinate indicates the R.P.M. $N_E$ of the engine.

In these Figures: letter $t_1$ designates the time at which the preceding learning pattern $P_n$ was produced; letter $t_2$ the present instant; letter P the point in which the learning pattern $P_n$ is produced; letters $R_f$ the fuel economy optimizing gear ratio; letters $T_{RS}$ the teaching gear ratio; and letters $R_C$ the comfort optimizing gear ratio.

From the following individual Equations, moreover, the fuel economy matching degree $M_f$, the driving force matching degree $M_F$ and the comfort matching degree $M_C$ are computed.

[Eq. 13]

$$M_f = \int_{t_1}^{t_2} | T_{RS} - R_f | \, dt / M_{fmax} \approx 0.5;$$

$$M_F = \int_{t_1}^{t_2} (\frac{dv}{A}) \, dt / M_{Fmax} \approx 0.9;$$

and

$$M_C = \int_{t_1}^{t_2} | T_{RS} - R_C | \, dt / M_{Cmax} = 0.6.$$

Therefore, the propriety $\alpha_T$ of the teaching gear ratio $T_{RS}$ is computed, as follows:

$$\alpha_T = \max (1\text{-}M_f, M_F, 1\text{-}M_C)$$

$$= \max (0.5, 0.9, 0.4)$$

$$= 0.9.$$

Moreover, the ambiguity $\mu_X(X_i)$ of the input value $X_i$ is computed by the following Equation:

[Eq. 14]  $$\mu_X(X_i) = 1 - \frac{1}{1 + (\frac{C_X}{X_i + X})^2}$$

Incidentally, letters $C_X$ designate a constant.

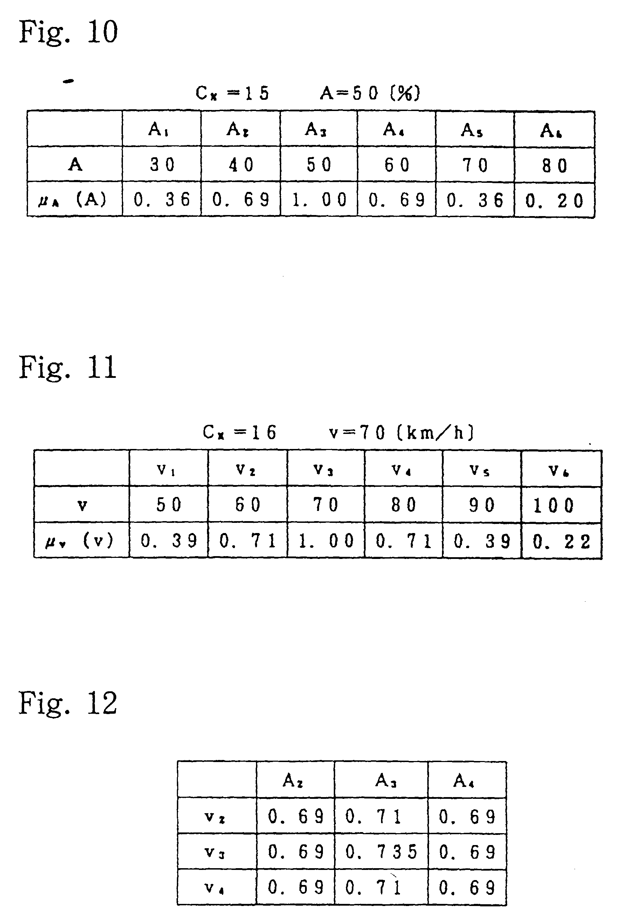

Fig. 10 is a diagram presenting the ambiguity of the input value in the embodiment of the present invention when the detected value is exemplified by the accelerator opening, and Fig. 11 is a diagram presenting the ambiguity of the input value in the embodiment of the present invention when the detected value is exemplified by the vehicle speed.

In these Figures: letters $A_1$ to $A_6$ designate the input value $X_i$ and its peripheral values when the detected value is exemplified by the accelerator opening; letters $\mu_A(A)$ the ambiguity of the input value $X_i$ when the detected value is exemplified by the accelerator opening A; letters $v_1$ to $v_6$ the input value $X_i$ and its peripheral values when the detected value is exemplified by the vehicle speed v; and letters $\mu_V(v)$ the ambiguity of the input value $X_i$ when the detected value is exemplified by the vehicle speed v.

Fig. 10 enumerates the result of computations of the ambiguity $\mu_A(A)$ of the input value $X_i$ for the constant $C_X = 15$ and the accelerator opening A = 50 [%]. On the other hand, Fig. 11 enumerates the result of computations of the ambiguity $\mu_V(v)$ of the input value $X_i$ for the constant $C_X = 16$ and the vehicle speed v = 70 [km/h].

Likewise, the ambiguity $\mu_{dA}(dA)$ of the input value $X_i$ when the detected value is exemplified by the accelerator operating speed dA and the ambiguity $\mu_{dv}(dv)$ of the input value $X_i$ when the detected value is exemplified by the acceleration dv are computed, and the teaching input value X is determined to satisfy the following relation:

$$\mu_X(X_i) > 0.5.$$

In the cases of Figs. 10 and 11, for example, the learning data are composed of the following combination:

$$(A_2, A_3, A_4) \cdot (v_2, v_3, v_4).$$

Incidentally, if the teaching gear ratio $T_{RS}$ is at 1.418, the gear ratio R or the output signal K of the neural network 11 takes the value of 2.1 so that the error $E_P$ is expressed by the following Equation:

$$E_P = (R - T_{RS})^2 / 2 = 0.23.$$

Therefore, the ambiguity $\mu_T(T_{RS})$ of the teaching gear ratio $T_{RS}$ is expressed by the following Equation:

$$[\text{Eq. 15}] \qquad \mu_T(T_{RS}) = 1 - \cfrac{1}{1 + (\cfrac{C_{TR}}{E_o + E_P})^2}$$

$$= 1 - \cfrac{1}{1 + (\cfrac{0.05}{0.2 - 0.23})^2}$$

$$= 0.735$$

Incidentally, the error $E_P$ has its minimum $E_o$ set to 0.2, and the constant $C_{TR}$ is set to at 0.05.

Moreover, the ambiguity $\beta_T$ of the subject

"the teaching gear ratio is set to $T_{RS}$ for the input value $X_i$"

is expressed, as follows:

$$\beta_T = \min \{\mu_A(_A), \mu_v(_v), \mu_{dA}(dA), \mu_{dv}(dV), \mu_T(T_{RS})\}.$$

Here, the ambiguity $\beta_T$ of the subject when the detected value is limited to the accelerator opening A and the vehicle speed v is simplified into the following Equation:

$$\beta_T = \min \{\mu_A(_A), \mu_v(_v), \mu_T(T_{RS})\}.$$

Fig. 12 presents the ambiguity of the subject in the embodiment of the present invention.

In Fig. 12: letters $A_2$ to $A_4$ designate the teaching input value S when the detected value is exemplified by the accelerator opening A; letters $v_2$ to $v_4$ designate the input value X when the detected value is exemplified by the vehicle speed v; and Letters $A_3$ and $v_3$ designate the input value $X_i$.

Therefore, the ambiguity y of the tolerance error $\varepsilon'(X)$ of the case, in which the error $E_P$ is converged into the $\varepsilon'(X)$, is computed in the following manner:

$$y = \min (\beta_T, \alpha_T)$$

$$= \min (0.735, 0.9)$$

$$= 0.735.$$

Therefore, the tolerance error $\varepsilon'(X)$ is computed in the following manner:

$$\varepsilon'(A_3, v_3) = \varepsilon\{(1 - y)^2 + 1\}$$

$$= 0.2 \times \{(1 - 0.735)^2 + 1\}$$

$$= 0.214.$$

Thus, the neural network 11 (as shown in Fig. 1) learns through the back propagation means 27. As the neighborhood values of the input value $(A_3, v_3)$, the learning pattern $P_n$ is also produced, as follows:

$$\epsilon'(A_2, v_2) = 0.219;$$

and

$$\epsilon'(A_3, v_2) = 0.217.$$

Thus, the learning pattern $P_n\{A_a, v_3, T_{RS}, \epsilon'(X)\}$ is produced, as exemplified in the following:
Input Value $(A_3, v_3)$
$\rightarrow P_1$ (50, 70, 1.418, 0.214);
Neighborhood Value $(A_2, v_2)$
$\rightarrow P_1$ (40, 60, 1.418, 0.219);
Neighborhood Value $(A_3, v_2)$
$\rightarrow P_1$ (50, 60, 1.418, 0.217);
Neighborhood Value $(A_4, v_2)$
$\rightarrow P_1$ (60, 60, 1.418, 0.219);
and
Neighborhood Value $(A_2, v_{a3})$
$\rightarrow P_1$ (40, 70, 1.418, 0.219).

When this learning pattern $P_n$ is inputted to the back propagation means 27, the combined loads $V_{ji}$ and $W_{kj}$ are so corrected that the error $E_P$ between the gear ratio R and the teaching gear ratio $T_{RS}$ may be converged to the tolerance error $\epsilon'(X)$.

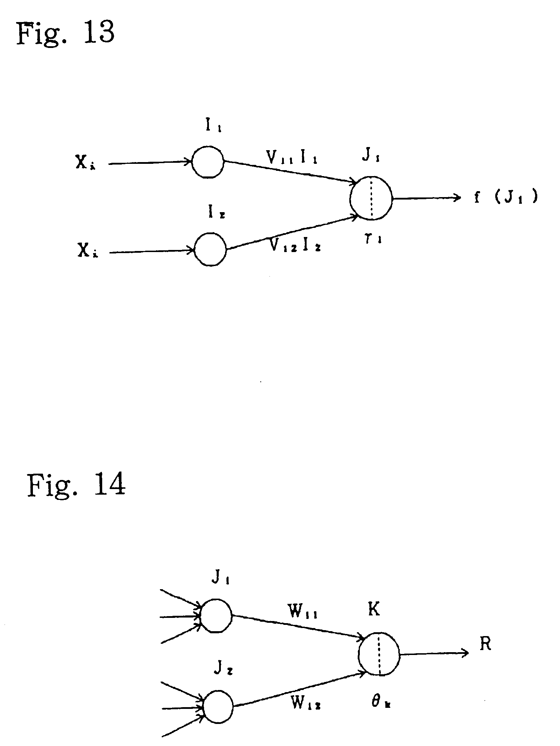

Fig. 13 is a first diagram showing the neuro-computation of the neural network in the embodiment of the present invention, and Fig. 14 is a second diagram showing the neuro-computation of the neural network in the embodiment of the present invention.

First of all, the input signal $I_i$ to the intermediate layer and the input signal $J_j$ to the output layer are computed by the following Equations:

$$[\text{Eq. 16}] \qquad X_i = 0.5, \; X_2 = 0.2, \; (V_{11}, V_{12}, \gamma_1) = (0.3, 0.4, 0.5)$$

$$I_i = X_i$$

$$I_1 = X_1 = 0.5$$

$$I_2 = X_2 = 0.2$$

$$J_j = \Sigma V_{ji} I_1 + \gamma_j$$

$$j_1 = 0.3 \times 0.5 + 0.4 \times 0.2 + 0.5 = 0.73$$

$$f(J_i) = \frac{1}{\{1 + \exp(-J_i/u_o)\}}$$

$$= \frac{1}{\{1 + \exp(-0.73/0.4)\}}$$

$$= 0.863$$

Incidentally, letters $X_1$ and $X_2$ designate the values of the input value $X_i$; letters $V_{11}$ and $V_{12}$ designate the values of the combined load $V_{ji}$; and letters $\gamma_1$ designate the value of the quantity of offset $\gamma_j$.

Then, the output signal K of the output layer is computed by the following Equations:

For $f(j_1) = 0.863$, $f(j_2) = 0.75$, and

$$(W_{11}, W_{12}, \theta_k) = (0.9, 0.8, 0.7),$$

$$K = \Sigma\, W_{kj}f(J_j) + \theta_k$$

$$= 0.7 \times 0.863 + 0.8 \times 0.75 + 0.7$$

$$= 2.0767.$$

Incidentally, letters $W_{11}$ and $W_{12}$ designate the values of the combined load $W_{kj}$.

Hence, the gear ratio R is computed by:

$$R = K$$

$$= 2.0767.$$

When the gear ratio R is thus computed, its difference $E_P$ from the teaching gear ratio $T_{RS}$ is computed, and the back propagation means 27 (as shown in Fig. 1) corrects the combined loads $V_{ji}$ and $W_{kj}$ till the converging condition is satisfied by the following Equation:

$$[\text{Eq. 17}] \qquad E_t' = \Sigma\frac{E_P}{\varepsilon_P} < \varepsilon_t \qquad (\varepsilon_t = 0.99)$$

In this case, it is the converging condition that the sum $E_t'$ of the values, which are computed by dividing the errors $E_P$ of the individual learning patterns $P_n$ by the individual tolerance errors $\varepsilon'(X)$ is smaller than the converged value $\varepsilon_t$. Then, the learning is ended by the neural network 11 when the error $E_P$ is converged into each tolerance error $\varepsilon'(X)$.

## Claims

1.  A control system for an automatic transmission, which is switched between a teaching mode and an automatic mode so that a shift is effected, when switched to the teaching mode, on the basis of a gear stage selected by a driver but, when switched to the automatic mode, on the basis of the running condition of a vehicle, comprising:

    a) sensor means for detecting a plurality of running conditions of the vehicle;
    b) a neural network (11) adapted to receive a plurality of detected values as its input values ($X_1...X_n$) from said sensor means, for outputting a gear ratio (12) in which each of said plurality of detected values is weighed by a combined load;
    c) gear stage convert means (12) for converting the gear ratio (12) outputted from said neural network (11) into a gear stage (G) ;
    d) shifting operation means adapted to be operated by a driver for selecting a teaching gear stage;
    e) driver operable mode switch means (14) for selectively switching the teaching mode, in which the shift is effected on the basis of the teaching gear stage coming from said shift operation means, and the automatic mode in which the shift is effected on the basis of the gear stage converted by said gear stage convert means;
    f) gear ratio convert means (26) for converting the teaching gear stage ($G_s$) selected by said shifting operation means into a teaching gear ratio ($T_{RS}$); characterized by
    g) tolerance error compute means (29) for computing the tolerance error ($\varepsilon'(X)$) to each of said input values ($X_1...X_n$) and the neighboured values of the input value ($X_i$), of the correction of a combined load of said neural network (11) on the basis of at least one of the propriety, in a fuel economy matching degree or a driving force matching degree of the teaching gear ratio ($T_{RS}$) coming from said gear ratio convert means, the error of each of said input values ($X_1...X_n$) and said neighboured values of the input value, and the difference between the teaching gear ratio ($T_{RS}$) coming from said gear ratio convert means (26) and the gear ratio (R) which is obtained from said neural network (11) by said input value ($X_i$);

h) pattern producing means (20) for producing a learning pattern ($P_n$), meaning the content of correction of the combined load of said neural network (11), which is composed of said input value ($X_1$) and said neighboured values of the input value ($X_i$), said teaching gear ratio ($T_{RS}$) and said tolerance error ($\varepsilon'(X)$); and
i) combined load correct means (27) for correcting the combined load of said neural network (11) on the basis of said pattern produce means (20).

2. A control system for an automatic transmission according to Claim 1,

wherein said tolerance error compute means (29) computes said tolerance error ($\varepsilon'(X)$) on the basis of the propriety of said teaching gear stage ($G_S$), and
wherein the propriety of said teaching gear stage ($G_S$) is computed from the fuel economy matching degree indicating the degree of deterioration of a fuel economy and the driving force matching degree indicating the level of the acceleration of the vehicle.

3. A control system for an automatic transmission according to Claim 1,

wherein said tolerance error compute means (29) computes said tolerance error ($\varepsilon'(X)$) on the basis of the ambiguity of said input value ($X_i$), and
wherein the ambiguity of said input value ($X_i$) is computed from the difference from a reference input value.

4. A control system for an automatic transmission according to Claim 1,

wherein said tolerance error compute means (29) computes said tolerance error ($\varepsilon'(X)$) on the basis of the ambiguity of said teaching gear stage ($G_S$), and
wherein the ambiguity of said teaching gear stage ($G_S$) is computed from the difference from the gear stage (G) which is obtained from said neural network (11) by the input value ($X_i$) at the time when said teaching gear stage ($G_S$) is selected.

5. A control system for an automatic transmission according to Claim 1,

wherein said tolerance error compute means (29) computes said tolerance error ($\varepsilon'(X)$) on the basis of the propriety of said teaching gear stage ($G_S$), the ambiguity of said input value ($X_i$) and the ambiguity of said teaching gear stage ($G_S$);
wherein the propriety of said teaching gear stage ($G_S$) is computed from the fuel economy matching degree indicating the degree of deterioration of a fuel economy and the driving force matching degree indicating the level of the acceleration of the vehicle,
wherein the ambiguity of said input value ($X_i$) is computed from the difference from a reference input value, and
wherein the ambiguity of said teaching gear stage ($G_S$) is computed from the difference from the gear stage (G) which is obtained from said neural network (11) by the input value ($X_i$) at the instant when said teaching gear stage ($G_S$) is selected.

**Patentansprüche**

1. Steuerungssystem für ein automatisches Getriebe, das zwischen einem Lernmodus und einem Automatikmodus gewechselt wird, so daß bei einem Wechsel in den Lernmodus eine Schaltung auf der Basis einer von einem Fahrer gewählten Getriebestufe ausgeführt wird, jedoch bei einem Wechsel in den Automatikmodus auf der Basis der Fahrbedingungen eines Fahrzeugs, mit

a) Sensoreinrichtungen zum Detektieren mehrerer Fahrbedingungen des Fahrzeugs;
b) einem neuronalen Netzwerk (11), das von den Sensoreinrichtungen mehrere detektierte Werte als Eingabewerte ($X_1...X_n$) empfangen kann, um ein Übersetzungsverhältnis (R) auszugeben, wobei in dem neuronalen Netzwerk (11) jeder der mehreren detektierten Werte von einem kombinierten Gewicht gewichtet wird;
c) Getriebestufe-Wandlereinrichtungen (12) zum Wandeln des von dem neuronalen Netzwerk (11) ausgegebenen Übersetzungsverhältnisses (R) in eine Getriebestufe (G);
d) Schaltbedienungseinrichtungen, die von einem Fahrer bedient werden können, um eine Lerngetriebestufe zu wählen;
e) fahrerbedienbare Moduswechseleinrichtungen (14) zum selektiven Wechseln des Lernmodus, in welchem auf der Basis einer von den Schaltbedienungseinrichtungen kommenden Lerngetriebestufe geschaltet wird, und des Automatikmodus, in welchem auf der Basis der von den Getriebestufe-Wandlereinrichtungen gewandelten Getriebestufe geschaltet wird;

f) Übersetzungsverhältnis-Wandlereinrichtungen (26) zum Wandeln der von den Schaltbedienungseinrichtungen gewählten Lerngetriebestufe ($G_s$) in ein Lernübersetzungsverhältnis ($T_{RS}$),

gekennzeichnet durch:

g) Toleranzfehler-Berechnungseinrichtungen (29), um zu jedem Eingabewert ($X_1...X_m$) und zu den benachbarten Werten des Eingabewerts ($X_i$)den Toleranzfehler ($\varepsilon'(X)$) der Korrektur eines kombinierten Gewichts des neuronalen Netzwerks (11) auf der Basis von mindestens einem der folgenden Parameter zu berechnen, nämlich der Angemessenheit in einem KraftstoffverbrauchÜbereinstimmungsgrad oder einem Antriebskraft-Übereinstimmungsgrad, des von den Übersetzungsverhältnis-Wandlereinrichtungen kommenden Lernübersetzungsverhältnisses ($T_{RS}$),

dem Fehler jedes Eingabewerts ($X_1...X_m$) und der benachbarten Werte des Eingabewerts und der Differenz zwischen dem von den Übersetzungsverhältnis-Wandlereinrichtungen (26) kommenden Lernübersetzungsverhältnis ($T_{RS}$) und dem Übersetzungsverhältnis (R), das von dem neuronalen Netzwerk (11) durch den Eingabewert ($X_i$) gewonnen wurde.

h) Mustererzeugungseinrichtungen (20) zur Erzeugung eines Lernmusters $P_n$, das die Güte der Korrektur des kombinierten Gewichts des neuronalen Netzwerks (11) bedeutet, wobei das Lernmuster aus dem Eingabewert $X_i$ und den benachbarten Werten des Eingabewerts $X_i$, dem Lernübersetzungsverhältnis ($T_{RS}$) und dem Toleranzfehler ($\varepsilon'(X)$) besteht; und

i) Korrektureinrichtungen des kombinierten Gewichts (27) zum Korrigieren des kombinierten Gewichts des neuronalen Netzwerks (11) auf der Basis der Mustererzeugungeinrichtungen (20).

2. Steuerungssystem für ein automatisches Getriebe nach Anspruch 1,

wobei die Toleranzfehler-Berechnungseinrichtungen (29) den Toleranzfehler ($\varepsilon'(X)$) auf der Basis der Angemessenheit der Lerngetriebestufe ($G_s$) berechnen, und

wobei die Angemessenheit der Lerngetriebestufe ($G_s$) aus dem Kraftstoffverbrauch-Übereinstimmungsgrad, der den Grad der Verschlechterung eines Krafstoffverbrauchs angibt, und dem Antriebskraft-Übereinstimmmungsgrad, der den Grad der Beschleunigung des Fahrzeugs angibt, berechnet wird.

3. Steuerungssystem für ein automatisches Getriebe nach Anspruch 1,

wobei die Toleranzfehler-Berechnungseinrichtungen (29) den Toleranzfehler ($\varepsilon'(X)$) auf der Basis der Ambiguität des Eingabewerts ($X_i$) berechnen, und

wobei die Ambiguität des Eingabewerts ($X_i$) aus der Differenz zu einem Referenzeingabewert berechnet wird.

4. Steuerungssystem für ein automatisches Getriebe nach Anspruch 1,

wobei die Toleranzfehler-Berechnungseinrichtungen (29) den Toleranzfehler ($\varepsilon'(X)$) auf der Basis der Ambiguität der Lerngetriebestufe ($G_s$) berechnen, und

wobei die Ambiguität der Lerngetriebestufe ($G_s$) aus der Differenz zu der Getriebestufe (G) berechnet wird, die von dem neuronalen Netzwerk (11) durch den Eingabewert ($X_i$) zu dem Zeitpunkt gewonnen wird, zu dem die Lerngetriebestufe ($G_s$) gewählt wird.

5. Steuerungssystem für ein automatisches Getriebe nach Anspruch 1,

wobei die Toleranzfehler-Berechnungseinrichtungen (29) den Toleranzfehler ($\varepsilon'(x)$) auf der Basis der Angemessenheit der Lerngetriebestufe ($G_s$), der Ambiguität des Eingabewerts ($X_i$) und der Ambiguität der Lerngetriebestufe ($G_s$) berechnen,

wobei die Angemessenheit der Lerngetriebestufe ($G_s$) aus dem Kraftstoffverbrauch-Übereinstimmungsgrad, der den Grad der Verschlechterung eines Kraftstoffverbrauchs angibt, und dem Antriebskraft-Übereinstimmmungsgrad berechnet wird, der den Grad der Beschleunigung des Fahrzeugs angibt,

wobei die Ambiguität des Eingabewerts ($X_i$) aus der Differenz zu einem Referenzeingabewert berechnet wird, und

wobei die Ambiguität der Lerngetriebestufe ($G_s$) aus der Differenz zu der Getriebestufe (G) berechnet wird, die von dem neuronalen Netzwerk (11) durch den Eingabewert ($X_i$) zu dem Zeitpunkt gewonnen wird, zu dem die Lerngetriebestufe ($G_s$) gewählt wird.

**Revendications**

1. Système de commande destiné à une transmission automatique, qui est commuté entre un mode apprentissage et un mode automatique de manière qu'un changement de vitesse ait lieu, lors d'une commutation en mode apprentissage, en se basant sur une gamme de vitesses sélectionnée par un conducteur mais, lors d'une commutation en mode automatique, en se basant sur la condition de roulement d'un véhicule, comprenant:

   a) un moyen formant capteur destiné à détecter une pluralité de conditions de roulement du véhicule;
   b) un réseau neuronal (11) adapté pour recevoir une pluralité de valeurs détectées en tant que valeurs d'entrée ($X_1....X_m$) provenant dudit moyen formant capteur, afin d'émettre un rapport d'engrenage (R) dans lequel chaque valeur de ladite pluralité de valeurs détectées est pondérée à l'aide d'une charge combinée;
   c) un moyen (12) de conversion de gamme de vitesses pour convertir le gamme de vitesses (R) émis par le réseau neuronal (11) en un gamme de vitesses (G);
   d) un moyen de changement de vitesse adapté pour être actionné par un conducteur afin de sélectionner une gamme de vitesses d'apprentissage;
   e) un moyen (14) de commutation de mode, actionnable par le conducteur, destiné à commuter sélectivement le mode apprentissage, dans lequel le changement de vitesse est effectué en se basant sur la gamme de vitesses d'apprentissage provenant dudit moyen de changement de vitesse, et le mode automatique dans lequel le changement de vitesse est effectué en se basant sur la gamme de vitesses convertie à l'aide dudit moyen de conversion de gamme de vitesses;
   f) un moyen (26) de conversion de rapport d'engrenage, destiné à convertir le gamme de vitesses d'apprentissage ($G_S$) sélectionnée par ledit moyen de changement de vitesse en un rapport d'engrenage d'apprentissage ($T_{RS}$), caractérisé par
   g) un moyen (29) de calcul d'erreur de tolérance pour calculer l'erreur de tolérance ($\varepsilon(x)$) pour chacune desdites valeurs d'entrée ($X_1...X_m$) et les valeurs voisines de la valeur d'entrée ($X_i$) de la correction d'une charge combinée dudit réseau neuronal (11) en se basant sur au moins la propriété du degré d'adaptation d'économie de carburant ou du degré d'adaptation de force d'entraînement du rapport d'engrenage d'apprentissage ($T_{RS}$) provenant dudit moyen de conversion de rapport d'engrenage, l'erreur de chacune desdites valeurs d'entrée ($X_1....X_m$) et desdites valeurs voisines de la valeur d'entrée, et la différence entre le rapport d'engrenage d'apprentissage ($T_{RS}$) qui provient dudit moyen (26) de conversion de rapport d'engrenage et le rapport d'engrenage (R) qui est obtenu à partir dudit réseau neuronal (11) par ladite valeur d'entrée ($X_i$);
   h) un moyen (20) de production de diagramme, destiné à produire un diagramme d'apprentissage ($P_n$) indiquant le contenu d'une correction de la charge combinée dudit réseau neuronal (11) qui est composée de ladite valeur d'entrée ($X_i$) et desdites valeurs voisines de la valeur d'entrée ($X_i$), dudit rapport d'engrenage d'apprentissage ($T_{RS}$) et de ladite erreur de tolérance ($\varepsilon'(X)$); et
   i) un moyen (27) de correction de charge combinée, destiné à corriger la charge combinée dudit réseau neuronal (11) en se basant sur ledit moyen de production de diagramme (20).

2. Système de commande destiné à une transmission automatique selon la revendication 1,

   dans lequel ledit moyen (29) de calcul d'erreur de tolérance calcule ladite erreur de tolérance ($\varepsilon'(X)$) en se basant sur la propriété de ladite gamme de vitesses d'apprentissage ($G_S$), et
   dans lequel la propriété de ladite gamme de vitesses d'apprentissage ($G_S$) est calculée à partir du degré d'adaptation d'économie de carburant indiquant le degré de détérioration d'une économie de carburant et le degré d'adaptation de force d'entraînement indiquant le niveau de l'accélération du véhicule.

3. Système de commande pour une transmission automatique selon la revendication 1:

   dans lequel ledit moyen (29) de calcul d'erreur de tolérance calcule ladite erreur de tolérance ($\varepsilon'(X)$) en se basant sur l'ambiguité de ladite valeur d'entrée ($X_i$), et
   dans lequel l'ambiguité de ladite valeur d'entrée ($X_i$) est calculée à partir de la différence d'une valeur d'entrée de référence.

4. Système de commande pour une transmission automatique selon la revendication 1,

dans lequel ledit moyen (29) de calcul d'erreur de tolérance calcule ladite erreur de tolérance ($\varepsilon'(X)$) en se basant sur l'ambiguïté de ladite gamme de vitesses d'apprentissage ($G_S$), et

dans lequel l'ambiguïté de ladite gamme de vitesses d'apprentissage ($G_S$) est calculée à partir de la différence vis-à-vis de la gamme de vitesses (G) qui est obtenue à partir dudit réseau neuronal (11) à l'aide de la valeur d'entrée ($X_i$) au moment où le gamme de vitesses d'apprentissage ($G_S$) est sélectionnée.

5. Système de commande pour une transmission automatique selon la revendication 1,

dans lequel ledit moyen (29) de calcul d'erreur de tolérance calcule ladite erreur de tolérance ($\varepsilon'(X)$) en se basant sur la propriété de ladite gamme de vitesses d'apprentissage ($G_S$), l'ambiguïté de ladite valeur d'entrée ($X_i$) et l'ambiguïté de ladite gamme de vitesses d'apprentissage ($G_S$),

dans lequel la propriété de ladite gamme de vitesses d'apprentissage ($G_S$) est calculée à partir du degré d'adaptation d'économie de carburant indiquant le degré de détérioration d'une économie de carburant et du degré d'adaptation de force d'entraînement indiquant le niveau de l'accélération du véhicule,

dans lequel l'ambiguïté de ladite valeur d'entrée ($X_i$) est calculée à partir de la différence vis-à-vis d'une valeur d'entrée de référence, et

dans lequel l'ambiguïté de ladite gamme de vitesses d'apprentissage ($G_S$) est calculée à partir de la différence vis-à-vis de la gamme de vitesses (G) qui est obtenue à partir du réseau neuronal (11) à l'aide de la valeur d'entrée ($X_i$) à l'instant où ladite gamme de vitesses d'apprentissage ($G_S$) est sélectionnée.

Fig. 1

# Fig. 2

```
                    ( START )                              ( 1 )

              ┌──────────────────────┐
              │  Read Detected Value │  S 1
              └──────────────────────┘

              ┌──────────────────────┐
              │  Compute Input Value │  S 2
              └──────────────────────┘

              ┌──────────────────────────┐
              │ Non − dimension Input Value │  S 3
              └──────────────────────────┘

              ┌──────────────────┐
              │  Neuro − Compute │  S 4
              └──────────────────┘

                    S 5        Automatic Mode    ┌──────────────────┐
                 ◇ Mode ? ◇ ───────────────────▶ │ Output Gear Stage │  S 6
                                                  └──────────────────┘
                 Teaching Mode
              ┌────────────────────────┐                   ( 1 )
              │ Read Teaching Gear Ratio│  S 7
              └────────────────────────┘

              ┌────────────────────────┐
              │ Select Learning Pattern │  S 8
              └────────────────────────┘

         N              S 9
       ◀────────── ◇ Learning ? ◇
                        Y
              ┌────────────────────────────────────┐
              │ Decide Propriety of Teaching Gear Ratio│  S 1 0
              └────────────────────────────────────┘

              ┌────────────────────────┐
              │ Compute Tolerance Error │  S 1 1
              └────────────────────────┘

              ┌────────────────────────┐
              │ Produce Learning Pattern │  S 1 2
              └────────────────────────┘

              ┌──────────────────────────────────┐
              │ Neuro − Compute by Learning Pattern │  S 1 3
              └──────────────────────────────────┘

              ┌────────────────────┐
              │ Correct Combined Load │  S 1 4
              └────────────────────┘

                    S 1 5      N
                 ◇ Converged ? ◇ ──────────┐
                        Y
```

# Fig. 3

# Fig. 4

Fig. 5

$\mu_x(X_i)$

Fig. 6

$\mu_T(T_{RS})$

Fig. 7

$\varepsilon'(X)$

Fig. 8

Fig. 9

# Fig. 10

$$C_x = 15 \qquad A = 50 \; (\%)$$

|  | $A_1$ | $A_2$ | $A_3$ | $A_4$ | $A_5$ | $A_6$ |
|---|---|---|---|---|---|---|
| A | 3 0 | 4 0 | 5 0 | 6 0 | 7 0 | 8 0 |
| $\mu_A$ (A) | 0. 3 6 | 0. 6 9 | 1. 0 0 | 0. 6 9 | 0. 3 6 | 0. 2 0 |

# Fig. 11

$$C_x = 16 \qquad v = 70 \; (km/h)$$

|  | $v_1$ | $v_2$ | $v_3$ | $v_4$ | $v_5$ | $v_6$ |
|---|---|---|---|---|---|---|
| v | 5 0 | 6 0 | 7 0 | 8 0 | 9 0 | 1 0 0 |
| $\mu_v$ (v) | 0. 3 9 | 0. 7 1 | 1. 0 0 | 0. 7 1 | 0. 3 9 | 0. 2 2 |

# Fig. 12

|  | $A_2$ | $A_3$ | $A_4$ |
|---|---|---|---|
| $v_2$ | 0. 6 9 | 0. 7 1 | 0. 6 9 |
| $v_3$ | 0. 6 9 | 0. 7 3 5 | 0. 6 9 |
| $v_4$ | 0. 6 9 | 0. 7 1 | 0. 6 9 |

Fig. 13

$X_i$ ──────▶ ◯ $I_1$ $V_{11}I_1$ ──▶ ◯ $J_1$ ──▶ f ($J_1$)

$X_i$ ──────▶ ◯ $I_2$ $V_{12}I_2$ ──▶ $T_1$

Fig. 14

$J_1$ $W_{11}$ $K$

◯ ──────▶ ◯ ──▶ R

$J_2$ $W_{12}$ $\theta_k$